# EUROPÄISCHE PATENTSCHRIFT

(11) **EP 0 744 118 B1**
(45) Veröffentlichungstag und Bekanntmachung des Hinweises auf die Patenterteilung: **04.03.1998**
(21) Anmeldenummer: 95907558.1
(22) Anmeldetag: 31.01.1995
(51) Int. Cl.: H05B 39/04, H02M 5/293, H02M 7/5383, H02M 7/48

(54) **GEREGELTE STROMVERSORGUNGSEINHEIT MIT EINEM ELEKTRONISCHEN TRANSFORMATOR**
REGULATED POWER SUPPLY UNIT WITH AN ELECTRONIC TRANSFORMER
UNITE D'ALIMENTATION REGULEE AVEC TRANSFORMATEUR ELECTRONIQUE

(30) Priorität: 07.02.1994 DE 4403707
(43) Veröffentlichungstag der Anmeldung: 27.11.1996
(73) Patentinhaber: LEICA MIKROSKOPIE UND SYSTEME GmbH, D-35530 Wetzlar (DE)
(72) Erfinder: HÜLSMANN, Dieter, D-35606 Solms (DE)
(74) Vertreter: Stamer, Harald, Dipl.-Phys.
(86) Internationale Anmeldenummer: DE9500149
(87) Internationale Veröffentlichungsnummer: WO9521514

(56) Entgegenhaltungen:
- EP-A- 0 572 690
- DE-A- 4 318 995
- US-A- 4 506 318

## Beschreibung

Die Erfindung betrifft eine geregelte Stromversorgungseinheit mit einem elektronischen Transformator gemäß dem Oberbegriff des Anspruches 1.

Elektronische Transformatoren sind seit einigen Jahren im Handel erhältlich. Sie werden beispielsweise von der Firma INSTA ELEKTRO GmbH & Co. KG in W-5880 Lüdenscheid, Deutschland vertrieben. und in ihrem Verkaufsprospekt "Insta-Impulse durch Elektronik 92/93", S.16 dargestellt. Eine ausführliche Beschreibung elektronischer Transformatoren findet sich im Elektronik-Handbuch, Heft 4, "Transformatoren und Dimmer für NV-Halogenlampen" der Firma Berker GmbH & Co.,D-5885 Schalksmühle 1, Deutschland. Ein "elektronischer Transformator" enthält im wesentlichen die folgenden Baugruppen. Eine erste Baugruppe in der Form eines Doppelweggleichrichters, der bei einer üblichen Netzwechselspannung von z.B. 230 V und 50 Hz an seinem Ausgang eine Spannung von ca. 230 V und 100 Hz abgibt. Ein selbstschwingender Oszillator bildet eine zweite Baugruppe, der in Abhängigkeit von dem Hersteller des elektronischen Transformators üblicherweise bei einer Frequenz von ca. 40 KHz schwingt. Es liegt dann eine Wechselspannung von ca. 230 V mit einer Frequenz von 40 KHz vor, die mit 100 Hz moduliert ist. Eine dritte Baugruppe umfaßt einen üblichen Transformator. Wegen der hochfrequenten Eingangsspannung braucht dieser im Verhältnis zu 50 Hz-Transformatoren nur sehr klein zu sein und liefert bei sehr hohem Wirkungsgrad eine relativ große Leistung. An dem Ausgang des Transformators liegt zum Beispiel eine Wechselspannung von 12 V und 40 KHz vor, die mit 100 Hz moduliert ist. Eine Phasenan- bzw. -abschnittssteuerungsschaltung bildet eine vierte Baugruppe. Diese Schaltung legt die Schwingungsdauer des Oszillators innerhalb der Netzschwingungsperiode und damit die transformierte, effektive Leistung fest. Zur Steuerung der Schwingungsdauer des Oszillators ist die Phasenanschnittsteuerschaltung mit einem Potentiometer verbunden, an dem sich der Effektivwert der Oszillator-Spannung und damit die Ausgangsspannung des elektronischen Transformators einstellen läßt.

Der Spitzenwert der Ausgangsspannung des elektronischen Transformators wird durch die Amplitude der höherfrequenten Wechselspannung bestimmt. Dieser Spitzenwert ändert sich hinsichtlich der Phasenanschnittsteuerung relativ wenig. Jedoch zeigen sich im Einstellbereich zu niedereren Spannungen hin Schwierigkeiten im Hinblick auf Schwankungen der primärseitigen Versorgungsspannung des elektronischen Transformators, die nicht ausgeregelt werden.

Wird ein solcher elektronischer Transformator zur Energieversorgung einer Beleuchtungseinrichtung eingesetzt, die beispielsweise eine Halogenlampe enthält, so läßt sich mit Hilfe des mit der Schaltung für die Phasenanschnittsteuerung verbundenen Potentiometers die Helligkeit der Beleuchtungseinrichtung einstellen. Es hat sich herausgestellt, daß im unteren Abschwächungsbereich der Helligkeit eine überproportionale Übertragung der Netzspannungsschwankungen auf den Laststrom auftritt. Dies ist für anspruchsvollere Anwendungen einer Beleuchtungseinrichtung, wie beispielsweise bei einem Mikroskop, von Nachteil.

Es sind Netzgeräte erhältlich, die eine sehr gute Strom- oder Spannungsstabilisierung aufweisen. Diese Netzgeräte sind jedoch aufwendig und kostspielig.

Es ist Aufgabe der Erfindung, eine geregelte Stromversorgungseinheit der im Oberbegriff des Anspruches 1 angegebenen Gattung derart weiterzubilden, daß über den gesamten Einstellbereich die Ausgangsgröße nahezu unabhängig von Schwankungen der Versorgungsspannung für die Stromversorgungseinheit möglichst konstant gehalten werden kann.

Diese Aufgabe wird bei einer Stromversorgungseinheit der im Oberbegriff des Anspruches 1 genannten Gattung durch die im Kennzeichen des Anspruches 1 angegebenen Merkmale gelöst.

In vorteilhafter Weise kann mit der erfindungsgemäßen Stromversorgungseinheit ein üblicher, im Handel erhältlicher elektronischer Transformator verwendet werden, bei dem die Steuerung der Höhe der Ausgangsspannung durch Ändern eines Widerstandswertes erfolgt. Gemäß dem Stand der Technik wird üblicherweise dieser Widerstandswert mit Hilfe eines Potentiometers eingestellt.

Ein Grundgedanke der Erfindung besteht darin, als veränderbaren Widerstand einen Transistor zu verwenden, der von einem Regler so gesteuert wird, daß die Ausgangsgröße der Stromversorgungseinheit unabhängig von Netzspannungsschwankungen möglichst konstant gehalten wird. Erfindungsgemäß werden gleichzeitig der Istwert für diesen Regler, die Versorgungsspannung für die aktiven Bauelemente des Reglers sowie die Bildung des Sollwertes durch Auskopplung der höherfrequenten Wechselspannungskomponente auf der Lastseite der erfindungsgemäßen, geregelten Stromversorgungseinheit gewonnen.

Ein besonderer Vorteil besteht darin, daß es nicht notwendig ist, in die Schaltungsanordnung des elektronischen Transformators einzugreifen, so daß dieser verwendet werden kann, wie er ist.

Vorteilhafte Weiterbildungen des Erfindungsgegenstandes sind in den Unteransprüchen angegeben.

Bei einer besonders vorteilhaften Weiterbildung des Erfindungsgegenstandes ist das Auskopplungsglied ein Transformator mit einem Kern, einer mit der Last in Reihe geschalteten Primärwicklung und einer Sekundärwicklung, die für die erste und die zweite Gleichrichterschaltung die Eingangsspannung liefert.

Auf diese Art lassen sich der Istwert und die Versorgungsspannung in sehr einfacher Weise gewinnen. Ein weiterer Vorteil ist, daß in diesem Fall eine Art einer Stromstabilisierung erzielt wird, und somit auch unterschiedliche Leitungslängen und Durchmesser, sowie Übergangswiderstände an Steckverbindungen und Klemmen teilweise ausgeregelt werden können. Hinzu kommt auch, daß bei dieser Ausgestaltung eine Potentialtrennung des Reglers von dem Niederspannungs-Lastkreis erhalten wird, wie sie häufig von Sicherheitsvorschriften verlangt wird. Ferner ist dann, wenn kein Laststrom fließt, auch der Regler spannungsfrei.

Die vorgenannte vorteilhafte Weiterbildung der Erfindung läßt sich besonders günstig gestalten, wenn die Primärwicklung von einer Ader einer Lastzuleitung gebildet wird. Eine besonders einfache Ausgestaltung läßt sich erreichen, wenn die Leitungsader ohne Umschleifung direkt durch den Kern des Transformators geführt wird. Vorteilhafterweise ist wegen des einfachen Aufbaus dieser Kern ein Ringkern.

Gemäß einer weiteren vorteilhaften Weiterbildung ist der ersten Gleichrichterschaltung, die vorzugsweise eine Spitzengwertgleichrichterschaltung ist, ein Glättungsglied mit einem Spannungsstabilisator nachgeschaltet, wobei der Spannungsstabilisator bevorzugt eine Zenerdiode ist und das Glättungsglied eine hohe Zeitkonstante aufweist, so daß dessen Ausgangsspannung im wesentlichen unabhängig von dem sich ändernden Laststrom ist. Infolgedessen wird dadurch eine sehr konstante Versorgungsspannung für die Reglerschaltung erhalten.

Gemäß einer anderen vorteilhaften Weiterbildung ist der zweiten Gleichrichterschaltung ein Glättungsglied nachgeschaltet. Dieses dient als Mittelwertbildner für den jeweils fließenden höherfrequenten Laststrom.

Eine wiederum andere Weiterbildung des Erfindungsgegenstandes besteht darin, daß das Auskopplungsglied ein Transformator ist, dessen Primärwicklung parallel zum Ausgang und zu der Last geschaltet ist und dessen Sekundärwicklung die Eingangsspannung für die erste und die zweite Gleichrichterschaltung liefert. Die Auskopplung kann mit Hilfe eines Transformators geringer Baugröße und mit wenigen Windungen für die beiden Wicklungen erfolgen. Bei einem derart geschalteten Transformator erfolgt nur eine Spannungsübertragung, so daß die Vorteile einer Stromstabilisierung nicht erhalten werden. Trotzdem kann aber insgesamt eine gute Stabilisierung der Ausgangsgröße erreicht werden. Wenn die Last abgeschaltet wird, so daß kein Laststrom fließt, bleibt die Spannungsversorgung für den Regler erhalten, da die Primärwicklung parallel zum Ausgang geschaltet ist.

Gemäß einer anderen Weiterbildung des Erfindungsgegenstandes werden als Auskopplungsglieder Kondensatoren verwendet. Wegen der kapazitiven Auskopplung parallel zum Ausgang liegt bei dieser Ausgestaltung keine stromstabilisierende Wirkung vor. Es läßt sich aber trotzdem eine gute Konstanthaltung der Ausgangsgrößen erreichen.

Grundsätzlich ist es im Rahmen der Erfindung auch möglich, als Auskopplungsglied ein Leitungsstück zu verwenden, das nur zu einem Abschnitt einer Ader der Lastzuleitung parallel verläuft. Der Auskopplungswirkungsgrad ist bei dieser Ausgestaltung gering. Die geometrische Anordnung des Leitungsstückes, von der auch die Größe der ausgekoppelten Spannung abhängt, ist zu beachten. Es ist zu vermeiden, daß die zweite Ader im Lastkreis parallel zu dem Auskopplungsabschnitt verläuft, damit die Auskoppelwirkung nicht aufgehoben wird. Jedoch ist die Einfachheit der Auskopplung kaum zu überbieten.

Der Erfindungsgegenstand wird im folgenden an Hand von Ausführungsformen unter Bezugnahme auf die Figuren beschrieben, die schematische Blockdiagramme zeigen.

Im einzelnen zeigt
- Fig. 1: ein vollständiges Blockdiagramm mit Ringkern zur Auskopplung,
- Fig. 2: die Auskopplung mit parallel zur Last geschaltetem Transformator,
- Fig. 3: die Auskopplung mit parallel zur Last geschalteten Kondensatoren und
- Fig. 4: die Auskopplung über ein Leitungsstück.

Ein elektronischer Transformator 1 ist auf seiner Sekundärseite mit einer Last 2 verbunden, die beispielsweise eine Lampe sein kann. Durch einen Ringkern 3 ist eine Ader der Lastzuleitung geführt.

Der Ringkern 3 weist eine Sekundärwicklung auf, die mit dem Eingang einer ersten Gleichrichterschaltung 4 und dem Eingang einer zweiten Gleichrichterschaltung 5 parallel verbunden ist. Die erste Gleichrichterschaltung 4 ist als ein Spitzenwertgleichrichter ausgestaltet. Der Ausgang der ersten Gleichrichterschaltung 4 ist mit dem Eingang eines Glättungsgliedes mit Spannungsstabilisator 6 verbunden, wobei für den Spannungsstabilisator 6 eine hohe Zeitkonstante gewählt wird. Dadurch bleibt die Ausgangsspannung im wesentlichen unabhängig von dem sich ändernden Laststrom.

Die Aussgangsspannung des Glättungspliedes mit Spannungsstabilisator 6 dient als Versorgungsspannung für eine Verstärker-Vergleicher-Schaltung 9. Ferner wird die Ausgangsspannung des Glättungsgliedes mit Spannungsstabilisator 6 einem Sollwertgeber 8 zugeführt, mit dem sich die lastseitige Ausgangsspannung der geregelten Stromversorgungseinheiteinstellen läßt.

Der Ausgang des Sollwertgebers 8 ist mit einem ersten Anschluß der Verstärker-Vergleicher-Schaltung 9 verbunden.

Der zweiten Gleichrichterschaltung 5 ist ein Glättungsglied 7 nachgeschaltet, das als ein Mittelwertbildner für den jeweils fließenden, höherfrequenten Laststrom dient.

Netzspannungsschwankungen führen zu einer Änderung des Laststroms und damit des detektierten Mittelwertes. Der Ausgang des Glättungsgliedes 7 ist mit einem zweiten Eingang der Verstärker-Vergleicher-Schaltung 9 verbunden.

In der Verstärker-Vergleicher-Schaltung 9 wird der Vergleich zwischen dem Sollwert, der am Ausgang des Sollwertgebers 8 erhalten wird, und dem Istwert durchgeführt, der von dem Glättungsglied 7 erhalten wird. Am Ausgang der Verstärker Vergleicher-Schaltung 9 wird ausgehend von dem Unterschied zwischen dem Sollwert und dem Istwert ein den Netzspannungsschwankungen entsprechendes Fehlersignal erhalten.

Der elektronische Transformator 1 weist zwei Anschlüsse a und b auf, die üblicherweise gemäß dem Stand der Technik mit den Klemmen eines einstellbaren, Widerstandes, wie eines Potentiometers verbunden sind. Die Ausgangsspannung des elektronischen Transformators 1 läßt sich in Abhängigkeit von dem Widerstandswert des einstellbaren Widerstandes einstellen.

Bei dem hier beschriebenen Ausführungsbeispiel ist der Widerstand mit veränderbarem Widerstandswert ein Transistor 10, der seine Versorgungsspannung über die Anschlüsse a und b des elektronischen Transformators 1 erhält. Das Ausgangssignal der Verstärker-Vergleicher-Schaltung 9, das heißt das Fehlersignal wird verwendet, um den Widerstandswert des Transistors so zu steuern, daß die Größe des Fehlersignals minimal wird (P-Regler).

Die erste und die zweite Gleichrichterschaltung 4 und 5, das Glättungsglied mit Spannungsstabilisator 6 und das Glättungsglied 7 sowie der Sollwertgeber 8 können aus passiven Bauelementen aufgebaut werden. Dann verbleibt nur die Verstärker-Vergleicher-Schaltung 9 als ein aktives Element, das für seinen Betrieb eine Versorgungsspannung benötigt. Die Versorgungsspannung für den Transistor 10 wird über die Anschlüsse a und b des elektronischen Transformators 1 bezogen, die herkömmlicherweise z.B. mit einem Potentiometer verbunden sind.

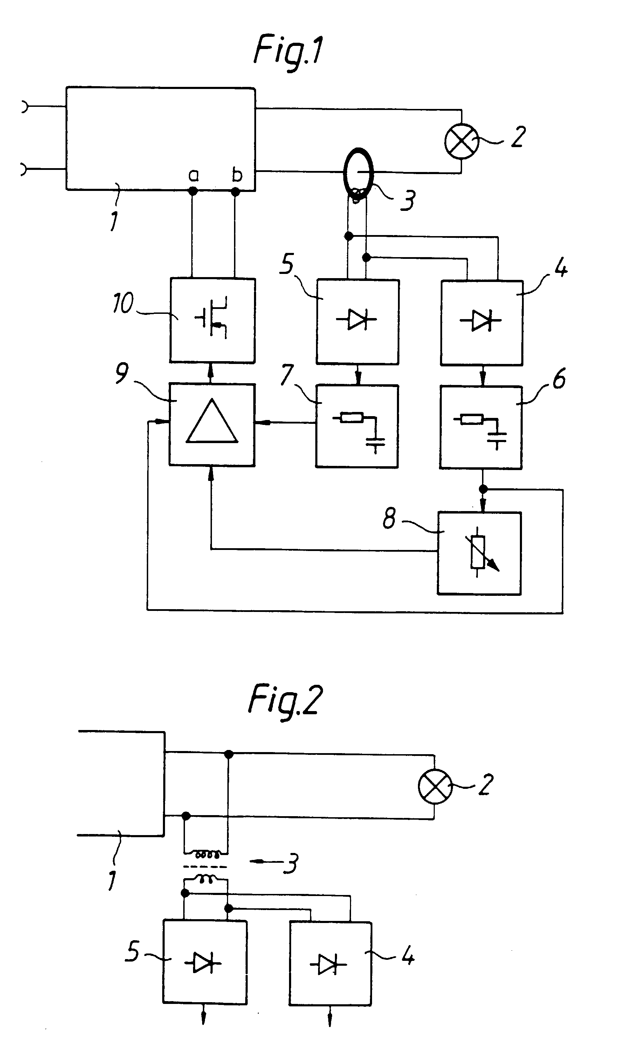

In den Figuren 2 bis 4 sind gleichwirkende Bauteile mit denselben Bezugszeichen versehen wie in Fig. 1.

Aus Fig. 2 ist ersichtlich, daß der parallel zum Ausgang des elektronischen Transformators 1 geschaltete Auskoppel-Transformator 3 zur Spannungsübertragung mehr Windungen benötigt als der vorbeschriebene Ringkern. Er ist daher aufwendiger. Da er im Vergleich zur Last wesentlich hochohmiger ist, entfällt die stromstabilisierende Wirkung.

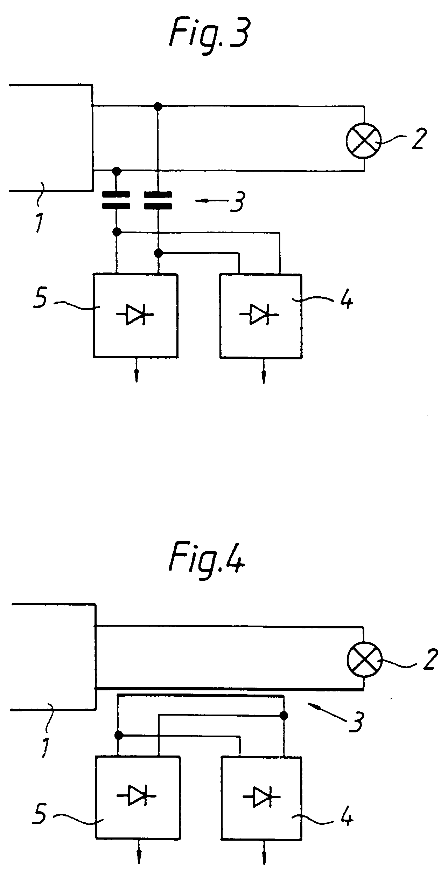

Das gilt auch für die in Fig. 3 dargestellten, parallel zum Ausgang des elektronischen Transformators 1 geschalteten Kondensatoren. Auch diese Schaltung ist relativ aufwendig, da für jede der Lastleitungen ein Kondensator vorgesehen werden muß und diese aus Gründen der Potentialtrennung eine besondere Bauart aufweisen müssen.

Die in Fig. 4 dargestellte Anordnung mit einem parallel zu einer Lastleitung angeordneten, evtl. mit ihr verdrillten Leitungsstück, demonstriert die oben bereits angegebene Einfachheit der Auskoppelschaltung.

Es ist darauf zu achten, daß die andere Lastleitung ausreichend entfernt oder abgeschirmt an dem Auskoppelstück entlanggeführt wird.

Der Erfindungegenstand wurde im Zusammenhang mit einer als Last verwendeten Beleuchtungseinrichtung, das heißt einer Lampe beschrieben. Es ist offensichtlich, daß es keine Beschränkung allein auf ein solches Lastglied gibt und andere verwendet werden können.

Als regelbarer Widerstand wurde vorzugsweise ein Transistor genannt. In einer aufwendigeren Anordnung könnte z.B. auch die Helligkeit einer Leuchtdiode durch den Regler verändert und deren Strahlung auf einen Fotowiderstand gegeben werden, der an den Eingängen a und b des elektronischen Transformators liegt. Zusammen mit dem Ringkern hätte diese Schaltung den Vorteil einer vollständigen Potentialtrennung auch des Reglerkreises bis hin zum Fotowiderstand. Nur dieser würde noch auf Netzpotential liegen.

## Patentansprüche

1. Geregelte Stromversorgungseinheit mit einem "elektronischen Transformator", der primärseitig einen Eingang für eine Transformatorversorgungsspannung, sekundärseitig einen Ausgang für eine eine höherfrequente Komponente aufweisende Betriebswechselspannung für eine Last und eine Steuereinrichtung mit einem veränderbaren Widerstandsglied umfaßt, mit dem die Betriebswechselspannung einstellbar ist, **gekennzeichnet durch** ein induktives oder kapazitives Auskopplungsglied (3), mit dem die höherfrequente Komponente der Betriebswechselspannung auskoppelbar ist, die als Eingangsspannung jeweils einer ersten Gleichrichterschaltung (4) und einer zweiten Gleichrichterschaltung (5) zugeführt wird, eine Verstärker-Vergleicher-Schaltung (9), an der die Ausgangsspannung der ersten Gleichrichterschaltung (4) nach Glättung als deren Versorgungsspannung anliegt, und eine Sollwertgeberschaltung (8), die mit der ersten Gleichrichterschaltung (4) und mit der Verstärker-Vergleicher Schaltung (9) verbunden ist und mit der ein Sollwert für die Betriebswechselspannung einstellbar ist, und wobei von der Ausgangsspannung der zweiten Gleichrichterschaltung (5) ein Istwert abgeleitet und der Verstärker-Vergleicher-Schaltung (9) zugeführt wird, an deren Ausgang ein Fehlersignal abnehmbar ist und einen Transistor (10), der das veränderbare Widerstandsglied bildet und der mit dem Fehlersignal der Verstärker-Vergleicher-Schaltung (9) angesteuert wird.

2. Stromversorgungseinheit nach Anspruch 1, **dadurch gekennzeichnet,** daß das Auskopplungsglied ein Transformator mit einem Kern (3), mit einer mit der Last in Reihe geschalteten Primärwicklung und mit einer Sekundärwicklung ist, die die Eingangsspannung für die erste (4) und die zweite (5) Gleichrichterschaltung liefert.

3. Stromversorgungseinheit nach Anspruch 2, **dadurch gekennzeichnet,** daß die Primärwicklung des Transformators von einer Leitungsader der Versorgungsleitung für die Last (2) gebildet ist.

4. Stromversorgungseinheit nach Anspruch 2 oder 3, **dadurch gekennzeichnet,** daß der Kern ein Ringkern (3) ist.

5. Stromversorgungseinheit nach Anspruch 3, **dadurch gekennzeichnet,** daß die Leitungsader der Versorgungsleitung für die Last (2) die Primärwicklung ohne Umschlaufung des Kernes (3) bildet.

6. Stromversorgungseinheit nach Anspruch 1, **dadurch gekennzeichnet,** daß das Auskopplungsglied ein Transformator ist, dessen Primärwicklung parallel zu der Last (2) geschaltet ist und dessen Sekundärwicklung die Eingangsspannungen für die erste (4) und die zweite (5) Gleichrichterschaltung liefert.

7. Stromversorgungseinheit nach Anspruch 1, **dadurch gekennzeichnet,** daß das Auskopplungsglied ein Kondensator ist.

8. Stromversorgungseinheit nach Anspruch 1, **dadurch gekennzeichnet,** daß der ersten Gleichrichterschaltung (4) ein Glättungsglied mit Spannungsstabilisator (6) nachgeschaltet ist, dessen Ausgang die Versorgungsspannung für die Verstärker-Vergleicher-Schaltung (9) liefert.

9. Stromversorgungseinheit nach Anspruch 1, **dadurch gekennzeichnet,** daß der zweiten Gleichrichterschaltung (5) ein Glättungsglied (7) als Mittelwertbildner nachgeschaltet ist, dessen Ausgang mit dem zweiten Vergleichseingang der Verstärker-Vergleicher-Schaltung (9) verbunden ist.

## Claims

1. Regulated current supply unit with an "electronic transformer", which comprises an input for a transformer supply voltage at the primary side, an output for an operating alternating voltage, which displays a component of higher frequency, for a load and a control equipment with a variable resistance member at the secondary side, by which member the operating alternating voltage is adjustable, characterised by an inductive or capacitive coupling-out member (3), by which the higher frequency component of the operating alternating voltage can be coupled out and fed as input voltage to each of a first rectifier circuit (4) and a second rectifier circuit (5), an amplifying comparator circuit (9), at which the output voltage of the first rectifier circuit (4) is after smoothing present as its supply voltage, and a target value generator circuit (8), which is connected with the first rectifier circuit (4) and with the amplifying comparator circuit (9) and by which a target value for the operating alternating voltage is settable, and wherein an actual value is derived from the output voltage of the second rectifier circuit (5) and fed to the amplifying comparator circuit (9), at the output of which an error signal is derivable, and a transistor (10), which forms the variable resistance member and is driven by the error signal of the amplifying comparator circuit (9).

2. Current supply unit according to claim 1, characterised thereby, that the coupling-out member is a transformer with a core (3), with a primary winding connected in series with the load and with a secondary winding which supplies the output voltage for the first rectifier circuit (4) and the second rectifier circuit (5).

3. Current supply unit according to claim 2, characterised thereby, that the primary winding of the transformer is formed by a conductor load of the supply line for the load (2).

4. Current supply unit according to claim 2 or 3, characterised thereby, that the core is a toroidal core (3).

5. Current supply unit according to claim 3, characterised thereby, that the conductor load of the supply line for the load (2) forms the primary winding without looping the core (3).

6. Current supply unit according to claim 1, characterised thereby, that the coupling-out member is a transformer, the primary winding of which is connected in parallel with the load (2) and the secondary winding of which supplies the input voltages for the first rectifier circuit (4) and the second rectifier circuit (5).

7. Current supply unit according to claim 1, characterised thereby, that the coupling-out member is a capacitor.

8. Current supply unit according to claim 1, characterised thereby, that a smoothing member with voltage stabiliser (6), the output of which delivers the supply voltage for the amplifying comparator circuit (9), is connected behind the first rectifier circuit (4).

9. Current supply unit according to claim 1, characterised thereby, that a smoothing member (7), the output of which is connected with the second comparison input of the amplifying comparator circuit (9), is connected as mean value former behind the second rectifier circuit (5).

## Revendications

1. Unité d'alimentation régulée avec un "transformateur électronique", qui comporte, côté primaire, une entrée pour une tension d'alimentation du transformateur, côté secondaire une sortie pour une tension alternative de fonctionnement présentant une composante à plus haute fréquence pour une charge et un système de réglage avec un organe formant résistance réglable au moyen duquel la tension alternative de fonctionnement peut être ajustée, caractérisée par un organe de découplage inductif ou capacitif (3) par lequel la composante à plus haute fréquence de la tension alternative de fonctionnement peut être découplée, qui reçoit en tant que tension d'entrée, à chaque fois, celle d'un premier circuit redresseur (4) et d'un second circuit redresseur (5), un circuit amplificateur-comparateur (9) auquel est appliquée la tension de sortie du premier circuit redresseur (4) après filtration, en tant que tension d'alimentation, et un circuit indicateur de la valeur de consigne (8) qui est relié au premier circuit redresseur (4) et au circuit amplificateur-comparateur (9) et au moyen duquel peut être ajustée une valeur de consigne pour la tension alternative de fonctionnement et où, de la tension de sortie du second circuit redresseur (5), est dérivée une valeur effective et qui est conduite au circuit amplificateur-comparateur (9) à la sortie duquel peut être prélevé un signal de défaut et un transistor (10) qui forme l'organe de résistance réglable et qui est régulé au moyen du signal de défaut du circuit amplificateur-comparateur (9).

2. Unité d'alimentation en courant selon la revendication 1, caractérisée en ce que l'organe de découplage est un transformateur avec un noyau (3), avec un enroulement primaire en série avec la charge et avec un enroulement secondaire lequel délivre la tension d'entrée pour les premier (4) et second (5) circuits redresseurs.

3. Unité d'alimentation en courant selon la revendication 2, caractérisée en ce que l'enroulement primaire du transformateur est formé d'un brin conducteur de la conduite d'alimentation pour la charge (2).

4. Unité d'alimentation en courant selon la revendication 2 ou 3, caractérisée en ce que le noyau est un noyau annulaire (3).

5. Unité d'alimentation en courant selon la revendication 3, caractérisée en ce que le brin de la conduite d'alimentation pour la charge (2) forme l'enroulement primaire sans boucle autour du noyau (3).

6. Unité d'alimentation en courant selon la revendication 1, caractérisée en ce que l'organe de découplage est un transformateur, dont l'enroulement primaire est en parallèle avec la charge (2) et dont l'enroulement secondaire délivre les tensions d'entrée pour le premier (4) et le second (5) circuits redresseurs.

7. Unité d'alimentation en courant selon la revendication 1, caractérisée en ce que l'organe de découplage est un condensateur.

8. Unité d'alimentation en courant selon la revendication 1, caractérisée en ce qu'un organe de filtrage est intercalé en arrière du premier circuit redresseur (4) avec stabilisateur de tension (6), dont la sortie délivre la tension d'alimentation pour le circuit amplificateur-comparateur (9).

9. Unité d'alimentation en courant selon la revendication 1, caractérisée en ce qu'un organe de filtrage (7) en tant que formeur de la valeur moyenne est intercalé en arrière du second circuit redresseur (5) dont la sortie est reliée à la seconde entrée de comparaison du circuit amplificateur-comparateur (9).
